# DEMANDE DE BREVET EUROPEEN

(11) **EP 3 556 500 A1**
(43) Date de publication de la demande: **23.10.2019**
(21) Numéro de dépôt: 19170243.0
(22) Date de dépôt: 18.04.2019
(51) Int. Cl.: B23D 45/04, B23D 45/10, B23D 47/04, B27B 5/10, B27B 5/24, B27B 5/22, B23D 47/08

(54) **DISPOSITIF DE COUPE DE QUARTIERS DE BOIS DE CHAUFFAGE**

(30) Priorité: 19.04.2018 FR 1853430
(71) Demandeur: ASI Ingenierie, 88650 Anould (FR)
(72) Inventeur: FUSILIER, Arnaud, 88650 ANOULD (FR)
(74) Mandataire: Merckling, Norbert

(57) **Abrégé**

L'invention concerne un dispositif de découpe (1) pour transformer un quartier de bois (32) en plusieurs bûches comprenant :
- un poste d'alimentation (5) à l'avant pour déposer le quartier dans ledit dispositif de découpe,
- un transporteur (7) pour transférer d'une part le quartier (32) entier vers au moins une station de découpe (9) et d'autre part les bûches vers un poste d'évacuation (6), la station de découpe (9) comprenant deux scies circulaires (9a,9b) découpant concomitamment et transversalement le quartier (32), montées sur un mécanisme pour déplacer les scies circulaires (9a,9b) entre une position de découpe et une position escamotée vers le bas sous le transporteur (7), lesdites scies circulaires (9a,9b) présentant un angle de dépouille s'évasant dans la direction d'avance du transporteur (7).

## Description

### Domaine technique

La présente invention se rapporte au domaine technique général de la découpe des quartiers de bois et plus généralement des pièces de bois de chauffage en bûches de longueur prédéterminée. Les bûches de bois doivent effectivement présenter des longueurs adaptées au système de chauffage dans lequel elles sont consumées.

Par quartier de bois, il convient d'entendre au sens large un morceau de bois obtenu par fendage d'un plus gros morceau ou un rondin obtenu directement d'une branche ou d'une section de tronc dont les dimensions permettent son utilisation en bois de chauffage.

La plupart des chaudières, poêles et cheminées à bois sont prévues pour utiliser des bûches de bois standardisées de 25, 33 ou 50 cm de long. Ainsi, avant d'être utilisés ou commercialisés, les quartiers de bois sont coupés en bûches à ces longueurs. La découpe des quartiers de bois en bûches est principalement effectuée de manière manuelle à l'aide d'une tronçonneuse traditionnelle ou d'une machine comprenant un poste de découpe comportant une ou plusieurs stations de découpe du type scie circulaire sur table, scie circulaire à chevalet ou scie à ruban.

Ces machines ou ces postes de découpe existants ne sont cependant pas dépourvus d'inconvénients. Ainsi, des postes de découpe semi-automatiques, comme par exemple le système décrit dans le document EP 2 705 937, sont souvent sujets à des dysfonctionnements liés à un quartier de bois venant bloquer les outils de coupe par exemple des scies circulaires ou des tronçonneuses, lorsque ledit quartier de bois n'est pas chargé parfaitement transversalement dans le poste de découpe. On pourra se reporter également au document WO 2008 092425. De tels dysfonctionnements nécessitent l'arrêt complet du poste de découpe et le dégagement du quartier de bois coincé avant de reprendre un fonctionnement normal. Cela génère souvent une perte de temps considérable et n'est pas sans risques d'accident pour l'opérateur.

On connaît également par l'intermédiaire du document DE 102004049699 A1, un dispositif de découpe adapté à transformer un quartier de bois en plusieurs bûches.

Le dispositif comprend deux scies circulaires agencées dans une station de découpe sur un arbre commun pourvu d'une articulation pour ajuster l'orientation des scies. Une telle solution techniquement complexe et fragile n'est pas optimale pour réduire les risques de coincement des bûches entre les scies.

L'objet de la présente invention vise par conséquent à fournir un nouveau dispositif de découpe ne présentant pas les inconvénients de l'art antérieur et dont le fonctionnement est optimisé dans la mesure où il permet de réduire de façon remarquable les risques de coincement lors des opérations de découpe.

Un autre objet de la présente invention vise à proposer un nouveau dispositif de découpe susceptible d'être déplacé facilement à l'aide d'un véhicule tracteur.

Un autre objet de la présente invention vise à proposer un nouveau dispositif de découpe dont la motorisation est particulièrement simple et efficace.

Les objets assignés à la présente invention sont atteints à l'aide d'un dispositif de découpe pour transformer un quartier de bois en plusieurs bûches comprenant :
- un poste d'alimentation situé à l'avant dudit dispositif de découpe pour déposer le quartier dans ledit dispositif de découpe,
- un transporteur pour transférer d'une part le quartier entier vers au moins une station de découpe et d'autre part les bûches vers une zone d'évacuation, caractérisé en ce que la station de découpe comprend une première et une deuxième scies circulaires agencées côte à côte et espacées transversalement à la direction d'avance du transporteur, pour découper concomitamment et transversalement à son extension longitudinale le quartier, lesdites scies circulaires étant montées chacune sur un support mobile dédié, pour déplacer les scies entre une position de découpe dans laquelle lesdites scies circulaires sont agencées sur le trajet du quartier et une position escamotée vers le bas sous le transporteur,
- lesdites première et deuxième scies circulaires présentant mutuellement dans leur position de découpe, un angle de dépouille s'évasant dans la direction d'avance du transporteur.

Avantageusement, le poste d'alimentation peur également être associé en amont à une chaîne d'amenage, afin de faciliter l'alimentation en bois.

Selon un exemple de réalisation préférentiel, l'angle de dépouille est compris entre 0,5° et 5° et de préférence compris entre 1° et 3°.

Selon un exemple de réalisation, le dispositif de découpe conforme à l'invention comprend dans une scie circulaire additionnelle centrée entre les première et deuxième scies circulaires et montée sur un support mobile pour la déplacer entre une position de découpe dans laquelle ladite scie circulaire est agencée sur le trajet du quartier et une position escamotée vers le bas sous le transporteur.

Un tel exemple de réalisation permet d'améliorer substantiellement la compacité du dispositif de découpe et de réduire son coût de fabrication.

Selon un autre exemple de réalisation, le dispositif de découpe conforme à l'invention comprend une seconde station de découpe en aval de la première station de découpe et en amont de la zone d'évacuation, ladite seconde station de découpe comportant une scie circulaire additionnelle agencée et centrée sur le trajet du quartier ou de la bûche centrale issue de la première station de découpe, ladite scie circulaire additionnelle étant montée sur un support mobile pour la déplacer entre une position de découpe dans laquelle ladite scie circulaire additionnelle est agencée sur le trajet du quartier de bois et une position escamotée vers le bas sous le transporteur.

Selon un exemple de réalisation, le dispositif de découpe conforme à l'invention comprend des mécanismes de positionnement dissociés pour les première et seconde scies circulaires, lesquels permettent, une fois les scies escamotées, de déplacer automatiquement les première et deuxième scies circulaires latéralement, de manière orthogonale à la direction d'avance du transporteur pour modifier la longueur de sciage des bûches.

Selon un exemple de réalisation du dispositif de découpe conforme à l'invention, chacune des scie circulaire est escamotable individuellement par l'intermédiaire d'un actionneur relié à chaque support mobile.

Selon un exemple de réalisation du dispositif de découpe conforme à l'invention, chacune des scies circulaires est associée à une motorisation hydraulique individuelle pour son entraînent en rotation.

Selon un exemple de réalisation, le dispositif de découpe conforme à l'invention comprend des organes d'entraînement d'un ensemble de pompes hydrauliques, associé à un organe d'accouplement à une prise de force d'un véhicule, du genre tracteur agricole ou autre.

Toute transmission mécanique peut également être utilisée pour entraîner en rotation les scies circulaires et pour entraîner le transporteur.

Selon un autre exemple de réalisation du dispositif de découpe conforme à l'invention, chacune des scies circulaires est associée à une motorisation thermique individuelle pour son entraînement en rotation.

Selon un autre exemple de réalisation du dispositif de découpe conforme à l'invention, chacune des scies circulaires est associée à une motorisation électrique individuelle pour son entraînement en rotation.

Selon un exemple de réalisation du dispositif de découpe conforme à l'invention, la zone d'évacuation comprend une trémie de réception des bûches et une bande transporteuse dirigée vers le haut et montée orientable selon un axe vertical sur la partie arrière dudit dispositif.

Selon un exemple de réalisation, le dispositif de découpe conforme à l'invention comprend un système d'aspiration pour évacuer la sciure et les copeaux de bois résultant des opérations de découpe des quartiers et/ou des bûches.

Selon un exemple de réalisation, le dispositif de découpe conforme à l'invention est monté sur un châssis roulant de manière à constituer un dispositif mobile et facilement déplaçable, ledit châssis roulant comprenant un système pour déplacer ledit dispositif entre une position haute adaptée aux déplacements sur chantiers, sur chemins forestiers et sur routes et une position basse, adaptée aux opérations de découpe afin d'obtenir un poste de travail au plus bas.

Selon un exemple de réalisation du dispositif de découpe conforme à l'invention, le transporteur comporte des rangées successives de taquets fixés sur des chaînes d'entrainement et s'élevant à partir d'une base de glissement dudit transporteur.

Selon un exemple de réalisation du dispositif de découpe conforme à l'invention, le poste d'alimentation comprend au niveau du transporteur, dans la zone de dépose du quartier de bois, un système d'entraînement transversal pour amener ledit quartier contre une butée latérale fixe avant son entraînement longitudinal par le transporteur.

Selon un exemple de réalisation, le dispositif de découpe conforme à l'invention comporte un dispositif de mise en longueur, disposé en amont de la première station de découpe et du côté opposé au côté sur lequel est agencé la butée latérale fixe, de manière à diminuer, par l'intermédiaire d'une opération de sciage ou de fraisage, la longueur du quartier lorsque cette dernière dépasse la largueur maximale souhaitée.

Le dispositif de découpe conforme à l'invention présente l'énorme avantage de pouvoir améliorer substantiellement le rendement lors de la découpe de quartiers de bois de chauffage.

Un autre avantage du dispositif de découpe conforme à l'invention réside dans la possibilité de modifier les longueurs des bûches en repositionnant et/ou en escamotant les scies circulaires réparties sur une ou deux stations de découpe successives de façon simple, rapide et automatique. Aucun démontage de pièces n'est nécessaire pour effectuer ce repositionnement.

Un autre avantage remarquable du dispositif de découpe conforme à l'invention, réside dans un accès aisé, lié notamment à l'escamotage des outils de coupe, en cas d'intervention, de maintenance ou d'une opération éventuelle de décoincement.

### Brève description des figures

D'autres caractéristiques et avantages de l'invention apparaîtront à la lecture de la description détaillée qui va suivre, donnés à titre d'exemple illustratifs et non limitatifs, description faite en référence aux dessins annexés, dans lesquels :
- la figure 1 est une vue d'ensemble en perspective d'un exemple de réalisation du dispositif de découpe conforme à l'invention ;
- la figure 2 est une représentation partielle du dispositif de découpe de la figure 1, dans laquelle ledit dispositif de découpe est dépourvu de ses caches de protection,
- la figure 3 est une vue de profil d'un exemple de réalisation d'un dispositif de découpe conforme à l'invention placé dans une configuration déployée ;
- la figure 4 est une illustration du dispositif de découpe de la figure 3 placée dans une configuration repliée et adaptée au transport sur route ;
- la figure 5 est une vue de dessus du dispositif de découpe de la figure 3 et dépourvu de caches de protection supérieurs;
- la figure 6 est un agrandissement B de la figure 5 ;
- la figure 7 est une illustration d'un exemple de réalisation de la partie avant en l'occurrence l'entraînement d'un exemple de réalisation d'un dispositif de découpe conforme à l'invention ;
- la figure 8 est une illustration d'un système d'entraînement transversal de quartiers de bois, montré également à la figure 6 ;
- la figure 9 est une illustration partielle et en perspective d'un exemple de réalisation du dispositif de découpe conforme à l'invention montrant plus particulièrement les outils de découpe ;
- la figure 10 est une illustration partielle et en perspective d'un exemple de réalisation du dispositif de découpe conforme à l'invention montrant plus particulièrement certains des outils de découpe en position escamotée;
- la figure 11 est une vue partielle, de dessus, illustrant le positionnement relatif des outils de découpe d'un exemple de réalisation d'un dispositif de découpe conforme à l'invention ;
- la figure 12 est une vue de dessus illustrant le positionnement relatif des outils de découpe d'un autre exemple de réalisation d'un dispositif de découpe conforme à l'invention ; et
- la figure 13, est une vue de dessus partielle d'un exemple de réalisation du dispositif de découpe conforme à l'invention, lequel est montré en fonctionnement.

### Exposé détaillé de l'invention

Dans la suite, les éléments représentés sur plusieurs figures, lesquels sont structurellement et fonctionnellement identiques comportent les mêmes références numériques ou alphanumériques.

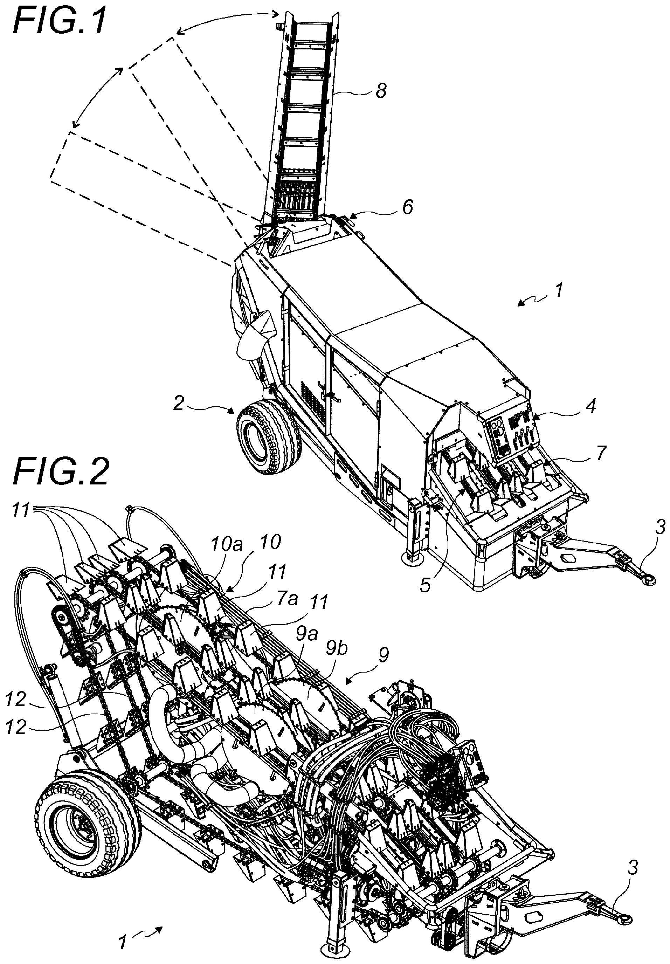

La figure 1 illustre un exemple de réalisation d'un dispositif de découpe 1 conforme à l'invention. Le dispositif de découpe 1 est avantageusement monté sur un châssis roulant 2 et comporte un crochet d'attelage 3 de manière à pouvoir le déplacer facilement une fois attelé à un véhicule tracteur.

Le dispositif de découpe 1 comporte un tableau de commande 4 permettant de piloter l'ensemble de ses fonctionnalités. Ce tableau de commande 4 permet notamment de piloter l'ensemble du dispositif ou machine et en particulier de commander la configuration des éléments de coupe.

Le dispositif de découpe 1 comprend un poste d'alimentation 5 situé à l'avant et une zone d'évacuation 6 agencé à l'arrière du dispositif de découpe 1.

Les quartiers de bois sont ainsi déposés dans le dispositif de découpe 1 au niveau du poste d'alimentation 5 et transférés par l'intermédiaire d'un transporteur 7 vers au moins une station de découpe 9 et/ou 10, puis vers la zone d'évacuation 6.

Le dispositif de découpe 1 comprend également, au niveau de la zone d'évacuation 6, une trémie de réception des bûches, lesquelles y sont acheminées par le transporteur 7. La trémie de réception est associée à une bande transporteuse 8 dirigée vers le haut et montée orientable selon un axe vertical sur la partie arrière du dispositif de découpe 1. Les bûches peuvent ainsi être chargées facilement dans un stockage temporaire, sur une remorque ou sur un camion de livraison.

La figure 2 illustre un exemple de réalisation du dispositif de découpe 1 dépourvu de carrosserie ou de caches de protection. Le dispositif de découpe 1 comprend par exemple une première station de découpe 9 pourvue de deux scies circulaires 9a et 9b ainsi que d'une seconde station de découpe 10 pourvue d'une scie circulaire 10a additionnelle.

Le transporteur 7 comprend avantageusement une base de glissement 7a et des rangées successives de taquets 11 fixés sur des chaînes d'entraînement 12. Les taquets 11 en saillie sur la base de glissement 7a permettent de conférer aux quartiers de bois ou aux bûches une direction d'avance longitudinale vers la partie arrière ou plus précisément vers la zone d'évacuation 6.

Les chaînes d'entraînement 12 tournent en circulation sur des pignons supports le long du transporteur 7 et sur des pignons de renvoi à chacune des extrémités dudit transporteur 7.

Le transporteur 7 comporte avantageusement plusieurs rangées de taquets 11, chaque rangée de taquets 11 supportant un quartier sur toute sa longueur lors de son déplacement. Les taquets d'entraînement 11 d'une même rangée sont disposés de façon à ce que l'intervalle entre lesdits taquets 11 corresponde par sa position et sa largeur à un espace suffisant pour le passage d'une scie circulaire 9a, 9b ou 10a.

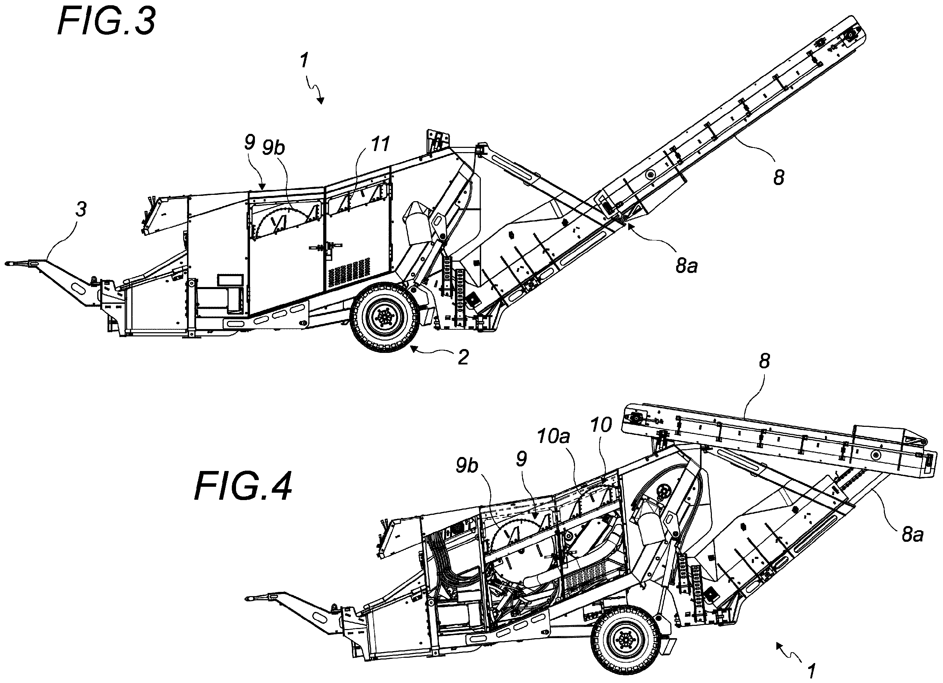

La figure 3 illustre le dispositif de découpe 1 de la figure 1 selon une vue de profil. Dans cette illustration un tapis d'évacuation 8 est déployé par l'intermédiaire notamment d'un vérin 8a ou de tout autre système mécanique ou hydraulique. Le tapis d'évacuation 8 est connu en tant que tel et n'est pas décrit davantage.

La figure 4 est une illustration du dispositif de découpe 1 de la figure 3, ouvert latéralement, montrant plus précisément le positionnement de la première station de découpe 9 et de la seconde station de découpe 10. Le tapis d'évacuation 8 est également représenté dans une position replié, adapté au transport sur route du dispositif de découpe 1.

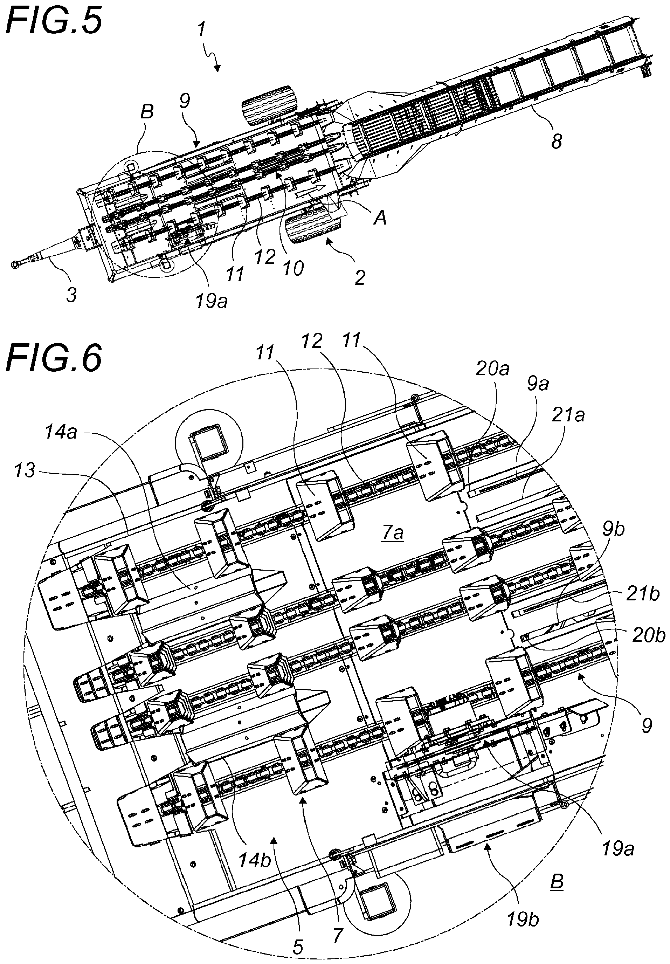

La figure 5 est une vue de dessus du dispositif de découpe 1 de la figure 3 et dépourvu de caches de protection supérieurs.

La figure 6 est un agrandissement B d'une partie de la figure 5 et plus précisément de la partie avant du dispositif de découpe 1. La figure 6 permet de visualiser plus en détails le poste d'alimentation 5.

Le poste d'alimentation 5 comprend au niveau du transporteur 7, dans une zone de dépose de quartiers de bois, un système d'entraînement transversal 14 pour amener ledit quartier de bois contre une butée latérale fixe 13 avant son entraînement longitudinal par ledit transporteur 7 et plus précisément par les taquets d'entraînement 11.

Le système d'entraînement transversal 14 comprend avantageusement un ou plusieurs rouleaux 14a et 14b montés rotatifs selon des axes longitudinaux au niveau de la face de dépose des quartiers de bois. Ces rouleaux 14a et 14b sont avantageusement en saillie sur la base de glissement 7a du transporteur 7 sur laquelle glissent les quartiers et les bûches en bois. Ceci permet aux rouleaux 14a et 14b d'entraîner transversalement le quartier contre la butée latérale fixe 13 avant les opérations de découpe.

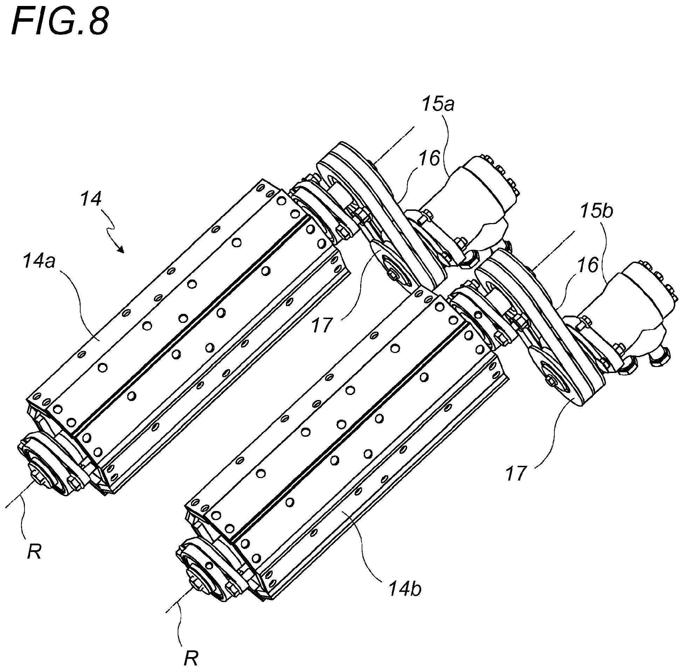

Le système d'entraînement transversal 14 est illustré plus en détail et de façon partielle à la figure 8. Les rouleaux 14a et 14b sont donc montés rotatifs selon des axes de rotation R longitudinaux dirigés selon la direction d'avance du transporteur 7 et des quartiers et des bûches. Ces rouleaux 14a et 14b sont entraînés respectivement par exemple par l'intermédiaire d'une motorisation hydraulique 15a et 15b. La liaison entre les rouleaux 14a et 14b et une motorisation hydraulique 15a et 15b respective est assurée par l'intermédiaire de moyens connus, notamment des courroies 16 et des poulies 17. Selon un autre exemple de réalisation, les rouleaux 14a et 14b sont entraînés par d'autres types de motorisation connus.

La figure 5 permet également de montrer le positionnement relatif entre la première station de découpe 9 et de la seconde station de découpe 10.

L'agrandissement B permet de mieux visualiser la base de glissement 7a du transporteur 7 sur laquelle glissent des quartiers et des bûches lorsque ces derniers ou ces dernières sont entraînés dans la direction d'avance par les taquets d'entraînement 11. La base de glissement 7a est ainsi pourvue de fentes au travers desquelles passent les fixations des taquets d'entraînement 11 sur les chaînes d'entraînement 12.

Les rouleaux 14a et 14b sont ainsi légèrement en saillie sur la base 7a, de manière à déplacer transversalement le quartier de bois contre la butée latérale fixe 13.

Le dispositif de découpe 1, selon un mode de réalisation avantageux comporte également un dispositif de mise en longueur, lequel permet de conférer une longueur constante aux quartiers de bois avant que ces derniers n'atteignent la première station de découpe 9.

Ce dispositif de mise en longueur est avantageusement disposé sur le côté opposé à la butée latérale fixe 13 entre le poste d'alimentation 5 et la première station de découpe 9.

Selon un exemple de réalisation, illustré par exemple aux figures 5 et 6, le dispositif de mise en longueur comporte deux scies de mise en longueur 19a superposées et motorisées en sens inverse.

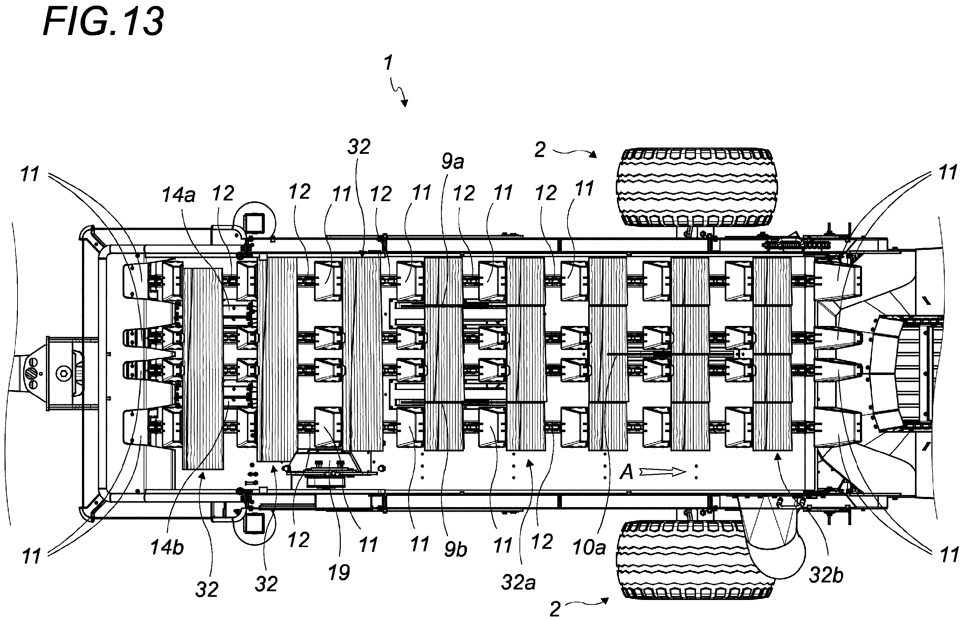

Selon un autre exemple de réalisation, illustré par exemple à la figure 13, le dispositif de mise en longueur comporte une fraise 19 motorisée. Les scies de mise en longueur 19a et la fraise 19 sont avantageusement associées à une motorisation hydraulique.

Avantageusement, le dispositif de découpe 1 comporte un caisson d'évacuation 19b, permettant d'évaluer les copeaux et/ou les morceaux de bois provenant du dispositif de mise en longueur.

La base de glissement 7a du transporteur 7 comporte également des fentes de positionnement 20a, 20b, 21a, 21b, lesquelles permettent le passage partiel des scies circulaires 9a et 9b. En fonction des longueurs souhaitées pour les bûches, les scies circulaires 9a et 9b traversent respectivement les fentes 20a et 20b ou 21a et 21b.

Ainsi lorsque les scies circulaires 9a et 9b sont positionnées au travers des fentes 20a et 20b et que la scie circulaire 10a additionnelle de la seconde station de découpe 10 est positionnée de façon opérationnelle, c'est à dire non escamotée, le quartier de bois de 1m de long est découpé en bûches de 25 cm chacune.

Dans l'hypothèse où les scies circulaires 9a et 9b sont positionnées au travers des fentes 21a et 21b et que la scie circulaire 10a de la seconde station de découpe 10 est positionnée dans une position escamotée, dite non opérationnelle, un quartier de bois de 1 m de long est découpé en trois bûches de 33 cm environ chacune.

Dans l'hypothèse où les scie circulaires 9a et 9b sont escamotées, le quartier de bois de 1m de longueur est transformé par la scie circulaire 10a additionnelle en deux bûches de 50 cm de longueur chacune.

Les scies circulaires 9a et 9b de la première station de découpe 9 sont avantageusement montées sur un mécanisme de positionnement pour les déplacer entre une position de découpe dans laquelle lesdites scies traversent partiellement les fentes de positionnement 20a, 21a 21b et 21a et une position escamotée vers le bas sous le transporteur 7. Afin de modifier la longueur des bûches, il convient donc de repositionner latéralement les scies circulaires 9a et 9b de la première station de découpe 9. À cet effet les scies circulaires 9a et 9b sont montées dans un support de motorisation mobile transversalement et pivotant permettant d'escamoter individuellement lesdites scies circulaires 9a et 9b avec leur support de motorisation respectif.

La scie circulaire 10a additionnelle de la seconde station de découpe 10 est également montée sur un support de motorisation pivotant permettant de l'escamoter entre une position opérationnelle de découpe et une position de repos ou position inactive, à savoir une position escamotée vers le bas, sous le transporteur 7.

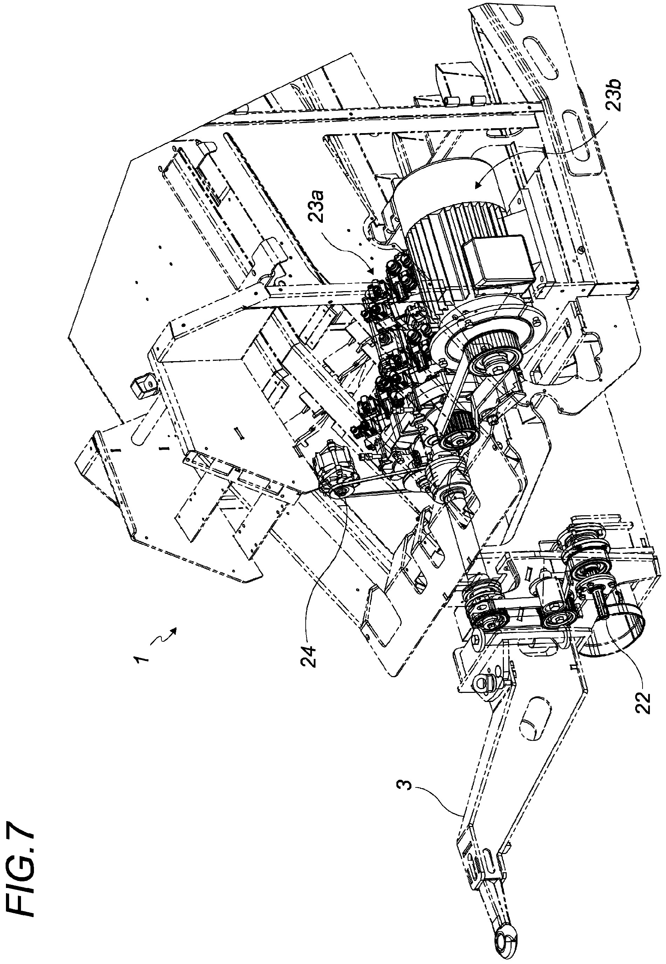

La figure 7 est une illustration partielle d'un mode de réalisation du dispositif de découpe 1 conforme à l'invention, illustrant des organes d'entraînement hydraulique à savoir un arbre d'entraînement 22 destiné à être accouplé à une prise de force d'un véhicule tracteur. Cet arbre d'entraînement 22 permet d'entraîner en rotation un ensemble de pompes hydrauliques 23a, ainsi que divers autres organes fonctionnels du dispositif de découpe 1. Avantageusement, un moteur électrique auxiliaire 23b, constituant un entraînement indépendant peut remplacer la prise de force.

Le dispositif de découpe 1 comprend également un alternateur 24 destiné à alimenter électriquement le tableau de commande 4 par l'intermédiaire d'une batterie et d'une logique électrique.

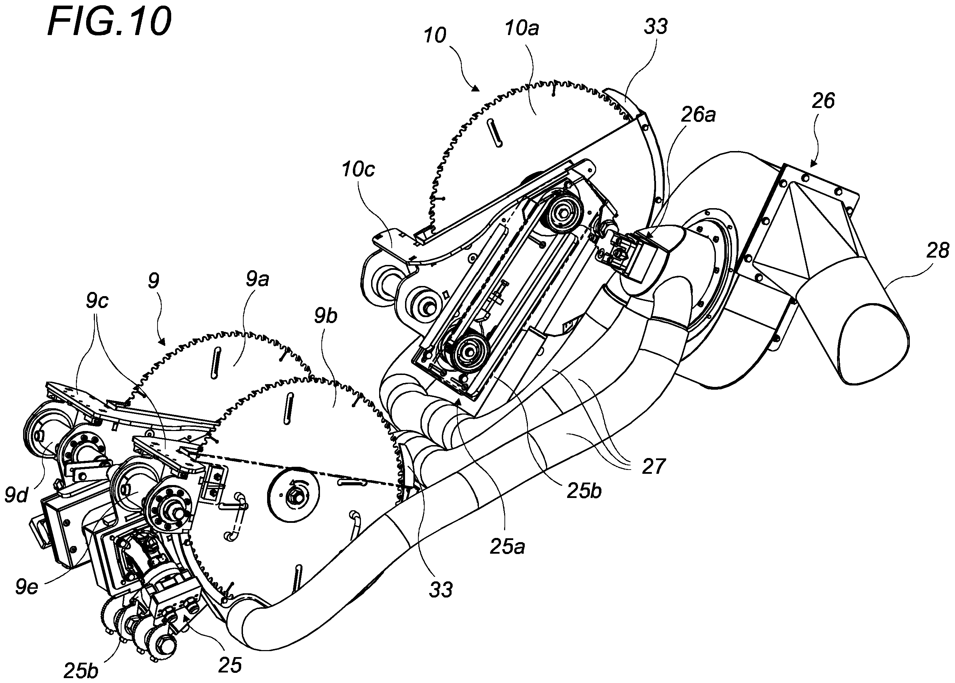

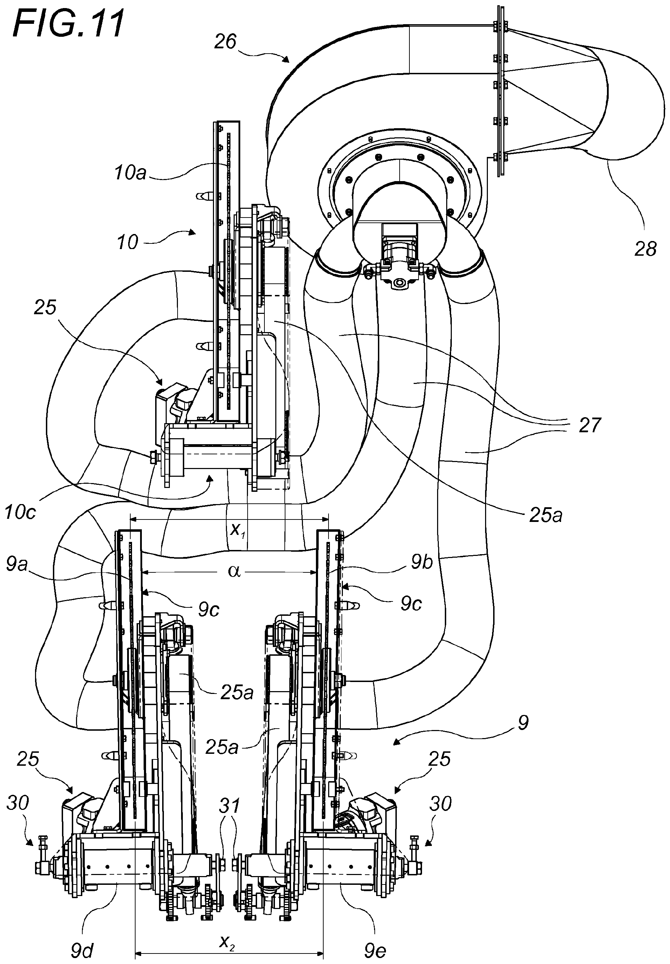

La motorisation hydraulique, connue en tant que telle, n'est pas décrite davantage. Cette motorisation comprend par exemple un moteur hydraulique 25 associé à chaque scie circulaire 9a, 9b, 10a pour assurer leur entraînement en rotation. On pourra se reporter aux figures 10 et 11.

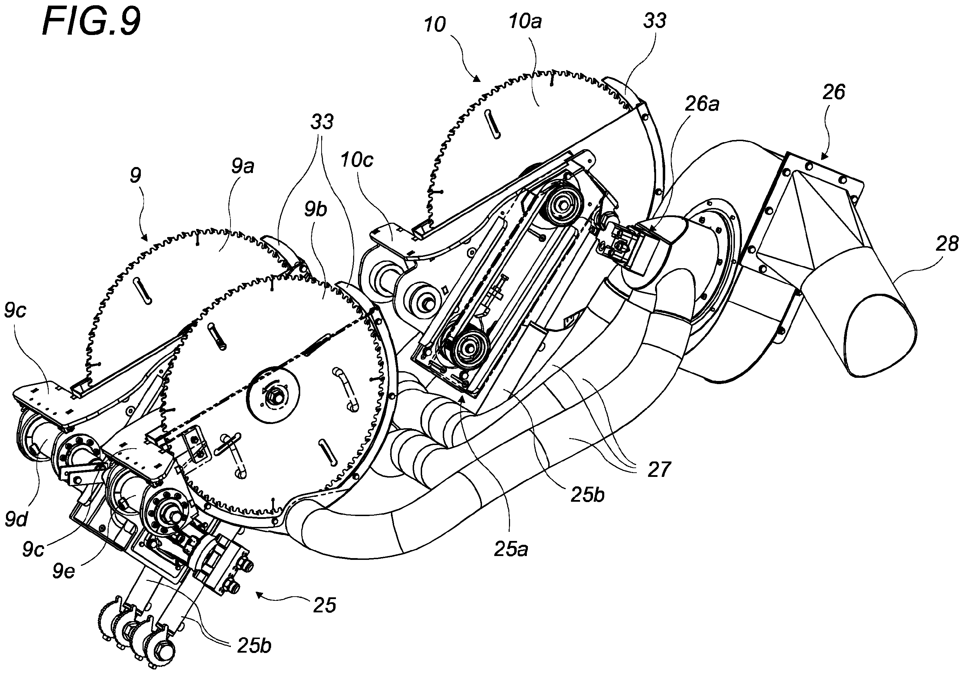

La figure 9 est une illustration partielle d'un mode de réalisation du dispositif de découpe 1, montrant plus en détails les stations de découpe 9 et 10 successives.

Les scies circulaires 9a, 9b et 10a sont respectivement montées sur les supports mobiles 9c et 10c selon des axes de rotation sensiblement transversaux à la direction d'avance A du transporteur 7. Chacun des supports mobiles 9c et 10c est monté pivotant sur une structure fixe du dispositif de découpe 1. Le déplacement de chacun des supports mobiles 9c et 10c est assuré par l'intermédiaire d'un vérin hydraulique 25b. Chacune des scies circulaires 9a, 9b et 10a peut ainsi être escamotée individuellement vers le bas dans une position inactive ou de maintenance située sous la base de glissement 7a. Une fois escamotées dans une telle position inactive, les scies circulaires 9a et 9b de la première station de découpe 9, illustrées à la figure 10, peuvent être déplacées latéralement afin de s'engager dans une autre fente 20a, 21a ou 20b, 21b de la base de glissement 7a pour modifier la longueur des bûches.

Les mécanismes de positionnement comprennent à cet effet des vérins de positionnement 9d et 9e pour déplacer transversalement les supports mobiles 9c.

Les scies circulaires 9a, 9b et 10a sont chacune mises en rotation grâce à un système d'entraînement 25a comportant une courroie.

Selon un exemple de réalisation, le dispositif de découpe 1 comprend un système d'aspiration 26 pour évacuer la sciure de bois et les copeaux de bois résultant des opérations de découpe des quartiers et/ou des bûches. Les emplacements où sont générés des copeaux ou de la sciure sont reliés au système d'aspiration 26 par l'intermédiaire de tuyaux ou conduits 27. Le système d'aspiration 26 refoule ensuite la sciure et les copeaux de bois vers un bac de réception par l'intermédiaire d'un conduit de refoulement 28. Le système d'aspiration 26 est avantageusement associé à un moteur hydraulique 26a.

Selon un exemple de réalisation illustré aux figures 9 et 10, les supports mobiles 9c et 10c sont pourvus d'un élément de protection 33, par exemple une plaque en demi-lune, s'étendant le long d'une portion de la périphérie des scies circulaires 9a, 9b et 10a. Ces éléments de protection 33 permettent d'éviter que des bûches tombant vers les scies circulaires 9a, 9b et 10a, ne soient happées par celles-ci et projetées contre le châssis du dispositif de découpe 1.

La figure 11 est une illustration en vue de dessus d'une partie du dispositif de découpe 1. Les supports de motorisation 9c sont montés dans le dispositif de découpe 1 de manière à ce que les scies circulaires 9a et 9b de la première station de découpe 9 présentent un angle de dépouille α compris entre 0,5° et 5°, de préférence compris entre 1° et 3° et de manière particulièrement préférée compris entre 1° et 1,5°.

A titre d'exemple, si l'angle de dépouille α est de 2°, cela correspond à un écartement des bords périphériques supérieurs X1 de 527 mm et à un écartement des bords périphériques inférieurs X2 de 500 mm des scies circulaires 9a et 9b.

L'angle de dépouille α permet ainsi de créer une ouverture dans le sens d'avance des quartiers qui atteignent la première station de découpe 9 et qui ne sont pas posés sur la base 7a de manière parfaitement orthogonale à la direction longitudinale ou d'avance du transporteur 7.

Le dispositif de découpe 1 comprend par ailleurs des vis de réglage 30 pour procéder au réglage de l'angle de dépouille a, par rapport à un point neutre de pivot 31.

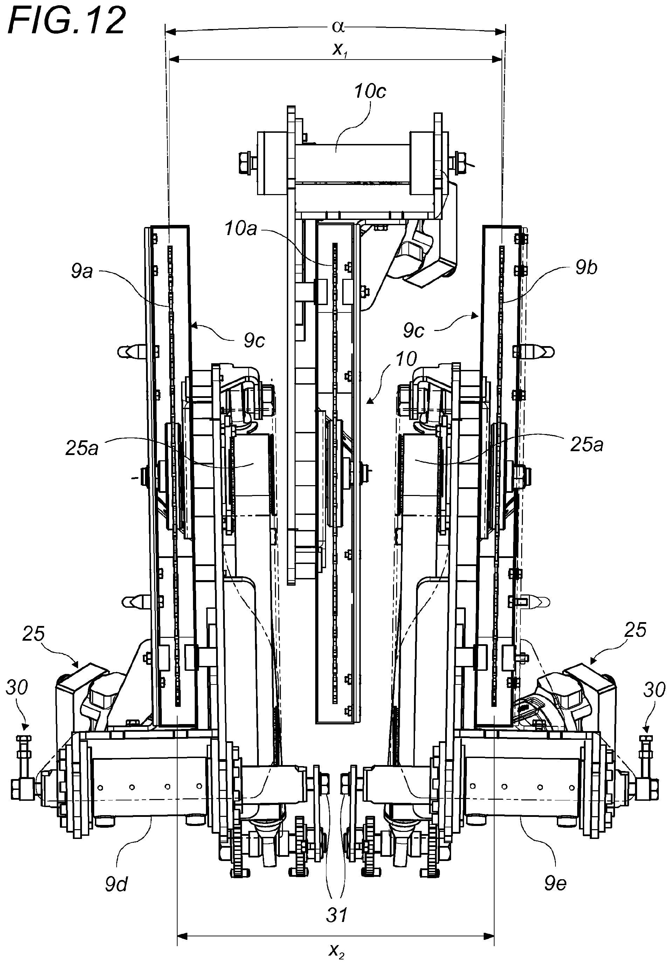

La figure 12 est une vue de dessus illustrant le positionnement relatif des outils de découpe d'un autre exemple de réalisation d'un dispositif de découpe 1 conforme à l'invention. Le dispositif de découpe 1 comprend ainsi la scie circulaire 10a additionnelle, centrée entre les première et deuxième scies circulaires 9a et 9b. La scie circulaire 10a additionnelle est montée sur un support mobile 10, pour la déplacer entre une position de découpe dans laquelle ladite scie circulaire 10a est agencée sur le trajet du quartier de bois et une position escamotée vers le bas sous le transporteur 7.

Dans ce mode de réalisation également, les scies circulaires 9a et 9b présentent mutuellement un angle de dépouille α s'évasant dans la direction d'avance A du transporteur 7. L'angle de dépouille α est compris entre 0,5° et 5°, de préférence compris entre 1° et 3° et de manière particulièrement préférée compris entre 1° et 1,5°.

La figure 13, est une vue de dessus partielle d'un exemple de réalisation du dispositif de découpe 1, lequel est montré en fonctionnement mettant en oeuvre l'une des possibilités de découpe.

Lorsqu'un quartier de bois 32 est inséré dans le poste d'alimentation 5, ledit quartier 32 est entrainé latéralement vers la butée latérale fixe 13 grâce aux rouleaux 14a et 14b. Les taquets 11 entrainent ensuite le quartier de bois 32 vers la fraise motorisée 19, laquelle donne la longueur souhaitée, par exemple 100 cm, au dit quartier de bois 32 si la longueur dudit quartier de bois 32 dépasse la longueur souhaitée.

Des quartiers de bois 32 entiers, sont ensuite entrainés par les taquets 11 dans la première station de découpe 9 dans laquelle les scies circulaires 9a et 9b découpent des bûches de 25 cm de longueur à chaque extrémité, pour obtenir une première transformation de quartier repérée par la référence 32a. La portion centrale du quartier de bois 32, de 50 cm de longueur, est ensuite entrainée vers la seconde station de découpe 10 dans laquelle la scie circulaire 10a additionnelle découpe ladite portion centrale en deux bûches supplémentaires de 25 cm de longueur, pour obtenir une seconde transformation de quartier repérée par la référence 32b.

De manière évidente, l'invention ne se limite pas au mode de réalisation préférentiel décrit précédemment et représenté sur les différentes figures, l'homme du métier pouvant y apporter de nombreuses modifications et imaginer d'autres variantes. Ainsi, une caractéristique technique décrite peut être remplacée par une caractéristique technique équivalente sans sortir ni de la portée, ni du cadre de l'invention définis par les revendications.

## Revendications

1. Dispositif de découpe (1) pour transformer un quartier de bois (32) en plusieurs bûches comprenant :
- un poste d'alimentation (5) situé à l'avant dudit dispositif de découpe (1) pour déposer le quartier (32) dans ledit dispositif de découpe (1),
- un transporteur (7) pour transférer d'une part le quartier entier vers au moins une station de découpe (9) et d'autre part les bûches vers une zone d'évacuation (6), **caractérisé en ce que** la station de découpe (9) comprend une première et une deuxième scies circulaires (9a) et (9b) agencées côte à côte et espacées transversalement à la direction d'avance du transporteur, pour découper concomitamment et transversalement à son extension longitudinale le quartier (32), lesdites scies circulaires (9a,9b) étant montées chacune sur un support mobile (9c) dédié, pour déplacer les scies circulaires (9a,9b) entre une position de découpe dans laquelle lesdites scies circulaires (9a,9b) sont agencées sur le trajet du quartier (32) et une position escamotée vers le bas sous le transporteur (7),
- lesdites premières et deuxième scies circulaires (9a) et (9b) présentant mutuellement dans leur position de découpe, un angle de dépouille (a) s'évasant dans la direction d'avance du transporteur (7).

2. Dispositif de découpe (1) selon la revendication 1, **caractérisé en ce que** l'angle de dépouille est compris entre 0,5° et 5° et de préférence compris entre 1° et 3°.

3. Dispositif de découpe (1) selon la revendication 1 ou 2, **caractérisé en ce qu'**il comprend une scie circulaire additionnelle (10a) centrée entre les première et deuxième scies circulaires (9a,9b) et montée sur un support mobile (10c) pour la déplacer entre une position de découpe dans laquelle ladite scie circulaire (10a) additionnelle est agencée sur le trajet du quartier (32) et une position escamotée vers le bas sous le transporteur (7).

4. Dispositif de découpe (1) selon la revendication 1 ou 2, **caractérisé en ce qu'**il comprend une seconde station de découpe (10) en aval de la première station de découpe (9) et en amont de la zone d'évacuation (6), ladite seconde station de découpe (10) comportant une scie circulaire (10a) additionnelle agencée et centrée sur le trajet du quartier (32) ou de la bûche centrale issue de la première station de découpe (9), ladite scie circulaire (10a) additionnelle étant montée sur un support mobile (10c) pour la déplacer entre une position de découpe dans laquelle ladite scie circulaire (10a) additionnelle est agencée sur le trajet du quartier de bois (32) et une position escamotée vers le bas, sous le transporteur (7).

5. Dispositif de découpe (1) selon l'une quelconque des revendications 1 à 4, **caractérisé en ce qu'**il comprend des mécanismes de positionnement dissociés pour les première et seconde scies circulaires (9a,9b), lesquels permettent de déplacer automatiquement les première et deuxième scies circulaires (9a,9b) latéralement, de manière orthogonale à la direction d'avance du transporteur (7) pour modifier la longueur des bûches.

6. Dispositif de découpe (1) selon l'une quelconque des revendications 1 à 5, **caractérisé en ce que** chacune des scie circulaire (9a,9b, 10a) est escamotable individuellement par l'intermédiaire d'un actionneur relié à chaque support mobile (9c,10c).

7. Dispositif de découpe (1) selon l'une quelconque des revendications 1 à 6, **caractérisé en ce que** chacune des scies circulaires (9a,9b, 10a) est associée à une motorisation hydraulique individuelle pour son entraînement en rotation.

8. Dispositif de découpe (1) selon l'une quelconque des revendications 1 à 6, **caractérisé en ce que** chacune des scies circulaires (9a,9b, 10a) est associée à une motorisation thermique individuelle pour son entraînent en rotation.

9. Dispositif de découpe (1) selon l'une quelconque des revendications 1 à 6, **caractérisé en ce que** chacune des scies circulaires (9a,9b, 10a) est associée à une motorisation électrique individuelle pour son entraînent en rotation.

10. Dispositif de découpe (1) selon l'une quelconque des revendications 1 à 9, **caractérisé en ce que** la zone d'évacuation (6) comprend une trémie de réception des bûches et une bande transporteuse (8) dirigée vers le haut et montée orientable selon un axe vertical sur la partie arrière dudit dispositif.

11. Dispositif de découpe (1) selon l'une quelconque des revendications 1 à 10, **caractérisé en ce qu'**il comprend un système d'aspiration (26) pour évacuer la sciure et les copeaux de bois résultant des opérations de découpe des quartiers (32) et/ou des bûches.

12. Dispositif de découpe (1) selon l'une quelconque des revendications 1 à 11, **caractérisé en ce qu'**il est monté sur un châssis roulant (2) de manière à constituer un dispositif mobile et facilement déplaçable, ledit châssis roulant (2) comprenant un système pour déplacer ledit dispositif entre une position basse adaptée aux opérations de découpe et une position haute adaptée pour la circulation sur route et sur les chemins forestiers.

13. Dispositif de découpe (1) selon l'une quelconque des revendications 1 à 12, **caractérisé en ce que** le transporteur (7) comporte des rangées successives de taquets (11) fixés sur des chaînes d'entrainement (12) et s'élevant à partir d'une base de glissement (7a) dudit transporteur (7).

14. Dispositif de découpe (1) selon l'une quelconque des revendications 1 à 13, **caractérisé en ce que** le poste d'alimentation (5) comprend au niveau du transporteur (7), dans la zone de dépose du quartier de bois (32), un système d'entraînement transversal (14) pour amener ledit quartier (32) contre une butée latérale fixe (13) avant son entraînement longitudinal par le transporteur (7).

15. Dispositif de découpe (1) selon la revendication 16, **caractérisé en ce qu'**il comporte un dispositif de mise en longueur (19, 19a), disposé en amont de la première station de découpe (9) et du côté opposé au côté sur lequel est agencé la butée latérale fixe (13), de manière à diminuer, par l'intermédiaire d'une opération de sciage ou de fraisage, la longueur du quartier (32) lorsque cette dernière dépasse la longueur maximale souhaitée.
